# FASCICULE DE BREVET EUROPEEN

(11) **EP 1 145 793 B1**
(45) Date de publication et mention de la délivrance du brevet: **01.02.2006**
(21) Numéro de dépôt: 01400646.4
(22) Date de dépôt: 12.03.2001
(51) Int. Cl.: B23K 9/038

(54) **Procédé et automate de soudage à l'arc utilisant des fils fourrés**
Verfahren und Lichtbogenschweisssteuerung mit gefüllten dichten Drähten
Method and arc welding automation device using filled hermetic wires

(30) Priorité: 15.03.2000 FR 0003312
(43) Date de publication de la demande: 17.10.2001
(73) Titulaire: SOCIETE JOSEPH SAURON MATERIEL INDUSTRIEL, 91070 Bondoufle (FR)
(72) Inventeur: Sauron, Jean, 91210 Draveil (FR); Gaunt, Gil, 77310 Saint Fargeau-Ponthierry (FR)
(74) Mandataire: Lerner, François

(56) Documents cités:
- CH-A- 418 490
- US-A- 4 672 173
- R LAHNSTEINER: "Welding of railway tracks by a high-efficiency narrow-gap MAG-process" WELDING REVIEW INTERNATIONAL, vol. 12, no. 4, novembre 1993 (1993-11), pages 200-204, XP000424005 Redhill, Surrey, GB

## Description

L'invention se rapporte au soudage à l'arc électrique utilisant a priori des fils fourrés.

Les fils fourrés sont des éléments allongés comprenant un métal d'apport pour la soudure à l'arc, chaque fil comprenant une âme métallique entourée d'une gaine, avec ou sans interposition d'un gaz favorable à la soudure (gaz inerte en particulier).

Il existe déjà de tels fils fourrés. Celui connu sous la référence LINCOR 33 de chez LINCOLN-USA (fil sans gaz) en est un exemple.

Un problème important posé dans l'invention peut s'exposer de la manière suivante :
- proposer un appareil et un procédé de soudage qui assurent des conditions opératoires fiables et rapides à mettre en oeuvre,
- qui permettent d'une manière efficace et simple d'accéder à la zone à souder, une fois l'appareil positionné,
- et qui permettent de réaliser une soudure de qualité appropriée.

Le document GB-A-1 571 530 décrit le montage d'un chalumeau sur un chariot, avec un dispositit de serrage qui permet un ajustement vertical, latéral et en inclinaison. Des ajustements sont ainsi possibles dans deux directions X et Y. Le document ne considère pas l'utilisation de fils fourrés. Les commandes possibles du chalumeau sont le réglage de l'intensité du courarit, le réglage de la vitesse d'avance du fil et le déplacement du chariot le long du rail, c'est-à-dire uniquement dans une direction X.

L'invention propose tout d'abord un automate de soudage à l'arc électrique utilisant a priori des fils fourrés, pour la maintenance ou la réparation de rails et appareils de voie, l'automate comprenant un bâti, un appareillage de soudage incluant une torche pour souder une zone de rail, une unité de commande et de contrôle du soudage, le bâti étant pourvu d'au moins deux moyens d'appui sur un rail, ces deux moyens d'appui et la torche étant sensiblement alignés le long dudit rail à souder, la torche étant mobile suivant au moins deux axes transversaux.

De cette manière, on va pouvoir obtenir une adaptation géométrique de la torche en fonction de la géométrie de la zone de rail à souder.

Dans la définition de l'automate, l'invention a également apporté une solution aux problèmes du montage de la torche sur le bâti, compte-tenu justement des différentes géométries, situations dans l'espace et/ou manières d'effectuer la soudure qui peuvent en pratique se rencontrer.

Ainsi, une autre caractéristique de l'invention conseille que l'automate comprenne en outre :
- des moyens de déplacement de la torche, pour assurer la mobilité de celle-ci suivant lesdits deux axes transversaux,
- des moyens de commande reliés auxdits moyens de déplacement de la torche, pour commander le déplacement de cette torche en direction suivant lesdits axes et en vitesse, ces moyens de commande comprenant :
   - des premiers moyens de commande pour commander un premier déplacement de la torche face sensiblement à la périphérie de la zone à souder, pour en effectuer un relevé d'emplacements géométriques, par l'intermédaire de moyens d'acquisition reliés à l'unité mémoire afin de mémoriser les emplacements géométriques relevés sur le rail,
   - et des seconds moyens de commande, pour commander automatiquement un second déplacement de la torche face à la zone à souder, dans les limites du relevé effectué et en fonction des emplacements géométriques mémorisés.

Manuellement, à l'endroit et à la vitesse qui conviennent, l'opérateur va donc pouvoir effectuer un pré-positionnement et un pré-réglage en déplacement de la torche, la mise en mémoire et le traitement de ces informations permettant ensuite d'obtenir les conditions de soudage recherchées, automatiquement

Pour une facilité de mise en oeuvre d'utilisation et une compacité du matériel, une autre caractéristique de l'invention conseille que :
- la torche soit liée, à l'extérieur du bâti, à un support pourvu de moyens de réglage en hauteur et/ou angulaire de la torche par rapport à ce support,
- et le support est relié, à l'intérieur du bâti, à des moyens de déplacement de la torche, pour déplacer celle-ci le long d'un axe longitudinal reliant lesdits deux moyens d'appui, et transversalement à cet axe, tel en particulier que dans un plan horizontal.

Par ailleurs, en alternative ou en complément, il est conseillé que :
- la torche soit reliée à une gaine, elle-même reliée à un dévidoir, dans lesquels respectivement passe et se dévide une bobine de fil fourré, et
- entre la torche et la gaine est interposé un redresse-fil, pour supprimer une courbure du fil fourré provoquée par son passage dans la gaine.

De cette manière, il va être possible de rendre la torche et le dévidoir amovible vis-à-vis du bâti, seul un réglage manuel par l'opérateur de l'écart entre la pointe de la torche et la surface à souder étant nécessaire avant mise en oeuvre de l'automate, le fil de soudage pouvant être logé en rouleau dans le dévidoir.

Concernant maintenant le procédé de soudage qui répond aux mêmes problèmes que ceux déjà évoqués, il est conseillé dans l'invention qu'il comprenne des étapes suivantes :
a) on positionne, le long d'au moins un rail, un automate de soudage à l'arc électrique utilisant a priori des fils fourrés, pour la maintenance ou la réparation de rails et appareils de voie, l'automate comprenant un bâti, un appareillage de soudage incluant une torche pour souder une zone de rail, l'automate étant aligné suivant sensiblement l'axe longitudinal du rail,
b) on place la torche dans une position de référence par rapport à la zone à souder,
c) on relève des caractéristiques géométriques de la zone à souder, pour obtenir des données de repérage,
d) on fournit ces données de repérage à une unité mémoire de l'unité de commande, et
e) on déclenche un programme de soudage qui tient compte desdites données de repérage fournies et qui induit un déplacement de la torche sur la zone à souder, un approvisionnement de la torche en fil fourré et une alimentation électrique déterminée de ladite torche, pour le soudage, cet approvisionnement et cette alimentation dépendant d'un type de soudage préalablement déterminé.

Un problème annexe résolu dans l'invention concerne par ailleurs la détermination de paramètres permettant d'optimiser le soudage, compte-tenu des conditions réelles rencontrées.

A cet égard, deux choix alternatifs, ou complémentaires, ont été retenus :
- tout d'abord, préalablement à l'étape e), on sélectionne par l'intermédiaire de l'unité de commande, et parmi plusieurs choix, le type de fil fourré correspondant à celui réellement utilisé pour le soudage, et l'automate en déduit :
   - les conditions d'approvisionnement de la torche en fil, telles que la vitesse d'approvisionnement,
   - les conditions d'alimentation électrique de cette torche, et
   - la vitesse de déplacement de ladite torche, au moins lors de l'étape e), et/ ou
- toujours préalablement à l'étape e), on sélectionne par l'intermédiaire de l'unité de commande, et parmi plusieurs choix, le type de rail à souder, et l'automate en déduit, en fonction de la typologie du rail :
   - les conditions d'approvisionnement de la torche en fil, telles que la vitesse d'approvisionnement,
   - les conditions d'alimentation électrique de cette torche, et
   - la vitesse de déplacement de ladite torche.

A noter que, dans un cas comme dans l'autre, on optimise le procédé de soudage en relation avec le type de fil utilisé pour le soudage et le type de soudage tels que préalablement déterminés, dans la mesure où, dans le second cas, il peut être particulièrement intéressant d'adapter les caractéristiques du fil (composition physico-chimique et vitesse de déroulement dans la torche, en particulier) en fonction de la typologie du rail (les appareils de voie étant en effet souvent en un acier plus souple, c'est-à-dire moins chargé en carbone, que les rails "courants", également appelés "rails de voie").

Selon encore une autre considération, il a été tenu compte dans l'invention des conditions dans lesquelles le relevé des caractéristiques géométriques lors de l'étape c) est à effectuer, ainsi que les conditions opératoires d'utilisation de la torche.

La solution conseillée est que :
- lors de l'étape b), on positionne en hauteur, et/ou angulairement la torche par rapport à la zone de rail à souder, dans sa position de référence,
- lors de l'étape c), on fait se déplacer la torche le long du contour de la zone à souder, pour relever lesdites caractéristiques géométriques,
- puis, lors de l'étape e), après un repositionnement de la torche dans sa position de référence, on fait se déplacer cette torche face à la zone à souder, selon le programme de soudage.

Une description plus détaillée de l'invention va maintenant être fournie en référence aux dessins annexés dans lesquels :
La figure 1 est une vue globale en perspective d'un mode de réalisation de l'automate de l'invention ;
la figure 2 est une vue de détail d'un mode de réalisation d'un croc d'appui et de retenue de l'automate sur le rail ;
la figure 3 est une vue schématique de face d'une partie de l'appareillage de soudage, dans l'environnement de la torche ;
la figure 4 montre schématiquement une possibilité de basculement et de mobilité en hauteur de la torche ;
la figure 5 schématise un mode possible de réalisation du boîtier de commande et de contrôle, avec sa façade (afficheur et clavier) retirée et placée de côté ;
la figure 6 schématise des emplacements géométriques définis sur le rail pour le mouvement de la torche ;
la figure 7 montre deux courbes de soudage (tension d'arc (V)/intensité d'arc (A)) pouvant être utilisées dans l'invention ;
et la figure 8 schématise l'utilisation d'une roue pour le roulement de l'automate.

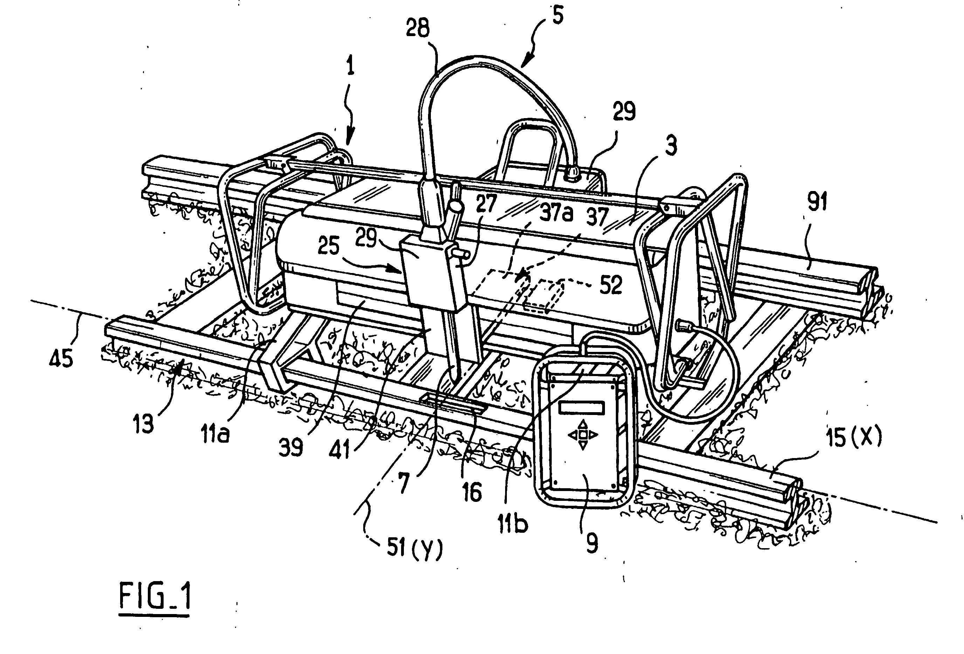

Sur la figure 1 tout d'abord, le repère 1 se rapporte de manière générale à un automate de soudage à l'arc électrique conforme à l'invention.

Il s'agit là d'un automate pour la maintenance ou la réparation de rails "courants", c'est-à-dire de rails situés a priori à l'écart des appareils de voie (tels que les aiguillages) qui posent des problèmes particuliers et sur lesquels on reviendra plus tard dans la description.

L'automate 1 comprend un bâti 3, un appareillage de soudage 5 comprenant en particulier une torche 7 et une unité 9 de commande et de contrôle du soudage.

Le bâti 3 est équipé de deux moyens d'appui 11a, 11b destinés à lier fixement le bâti 3 au rail 13 dont une surface supérieure 15 est endommagée et donc à réparer par apport d'une certaine quantité de métal dans le creux 16 formé.

Ce creux 16 a pu en particulier se former lors d'un arrêt puis d'un redémarrage d'un train à grande vitesse.

Les deux moyens d'appui 11a, 11b chevauchent le rail 13 et sont situés légèrement en saillie sur la face avant du bâti 3, tandis que la torche 7 est positionnée sensiblement suivant l'axe joignant ces deux moyens d'appui, permettant ainsi un auto-alignement de l'automate le long du rail 13.

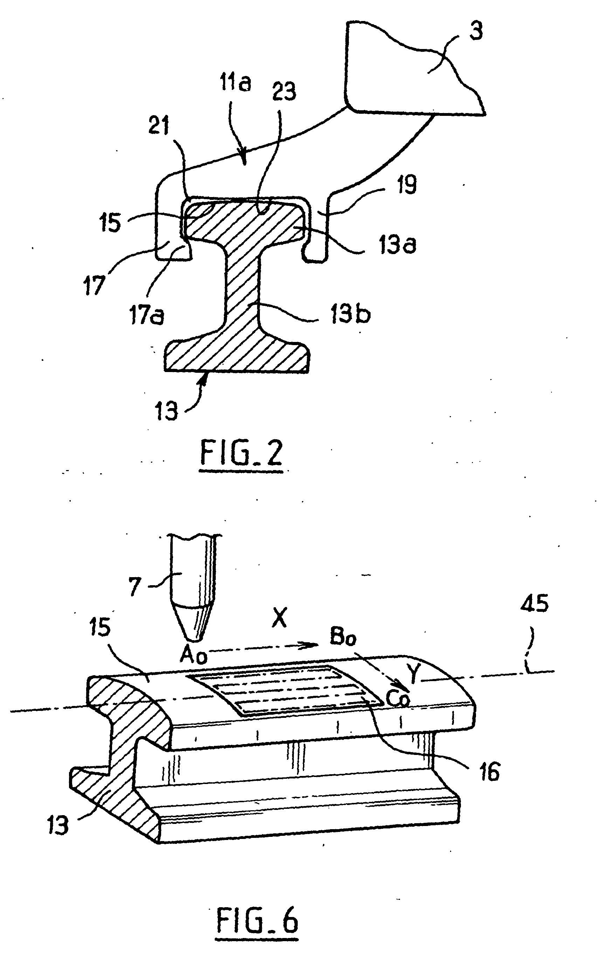

Sur la figure 2, l'un des moyens d'appui a été représenté en vue agrandie.

Le moyen 11a (l'autre est identique) comprend une partie frontale 17 en forme de crochet (avec un rebord inférieur 17a) adaptée pour pouvoir être disposée sous la tête élargie 13a du rail 13, juste au-dessus de l'âme plus fine 13b de ce rail, une paroi arrière 19 complétant la forme en pince de cette extrémité libre du moyen d'appui 11a.

Comme on peut le voir sur la figure 2, chaque moyen d'appui du bâti consistera ainsi en un moyen de crochetage, la tête supérieure 13a du rail étant engagée assez étroitement à l'intérieur du creux 21 limité latéralement par les deux pinces de crochetage 17 (17a) et 19, le rebord de retenue 17a retenant en position l'ensemble du bâti, en relation avec la surface d'appui 23 qui vient alors porter sur la surface supérieure 15 de la tête du rail, comme le montre cette figure 2 qui situe le moyen 11a dans l'état crocheté du rail.

En l'espèce, c'est donc le poids du bâti 3 en porte à faux par rapport aux moyens 11a, 11b qui "verrouille" l'automate vis-à-vis du rail, par crochetage.

Entre les deux moyens d'appui 11a, 11b, est disposée la torche 7.

Pour constituer l'appareillage de soudage, la torche 7, liée à son support 25, est connectée à un système d'alimentation en fil fourré comprenant une gaine 27 et un dévidoir 29, un moteur 30 entraînant la circulation du fil fourré dans le dévidoir, dans le câble puis à l'intérieur de la torche.

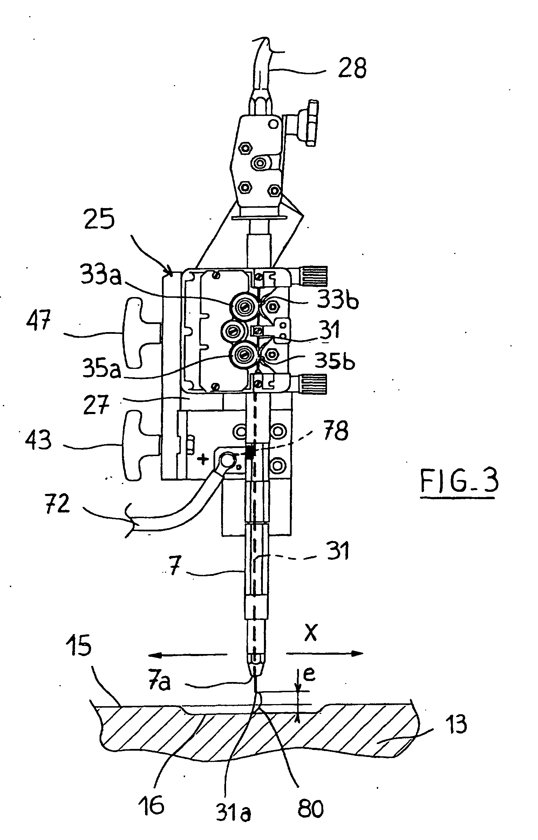

Les figures 1 et 3 montrent la torche 7 sur le support 25 à l'extérieur du bâti 3.

Ce support comprend un boîtier vertical 27 (dont le capot frontal de protection 29 a été retiré sur la figure 3) et un plateau 37.

Sur cette figure 3, on peut ainsi constater que, intérieurement, la torche 7 (qui se présente comme un tube) est alimentée avec le fil fourré 31, lequel est redressé, en amont de la torche, par l'intermédiaire des deux séries de double rouleaux presseurs 33a, 33b, 35a, 35b, de telle sorte qu'après avoir été courbé à l'intérieur du câble d'alimentation 28 (qui est relativement souple et incurvé comme on peut le voir sur la figure 1), le fil fourré 31 prend une forme droite, rectiligne, avant de passer à l'intérieur de la torche tubulaire 7, elle-même droite.

Le boîtier support 27 sur lequel est donc rigidement fixée la torche 7 est monté de manière amovible sur le plateau 37 de liaison avec le bâti 3.

Le plateau-support 37 présente une plaque horizontale 37a qui s'engage à l'intérieur du bâti à travers une fente protégée 39, et une plaque verticale 41 à laquelle le boîtier 27 est fixé.

La position de référence, pour cette fixation, est une position dans laquelle la torche est verticale.

Un réglage en hauteur (dans une glissière) du boîtier 27 par rapport à sa plaque de fixation 41 existe avantageusement, de manière à faciliter le positionnement en hauteur de la pointe de soudage 7a de la torche 7 par rapport au rail 13, une fois l'automate en place (distance adaptable e représentée sur la figure 3). Une molette 43 fixe cette position en hauteur.

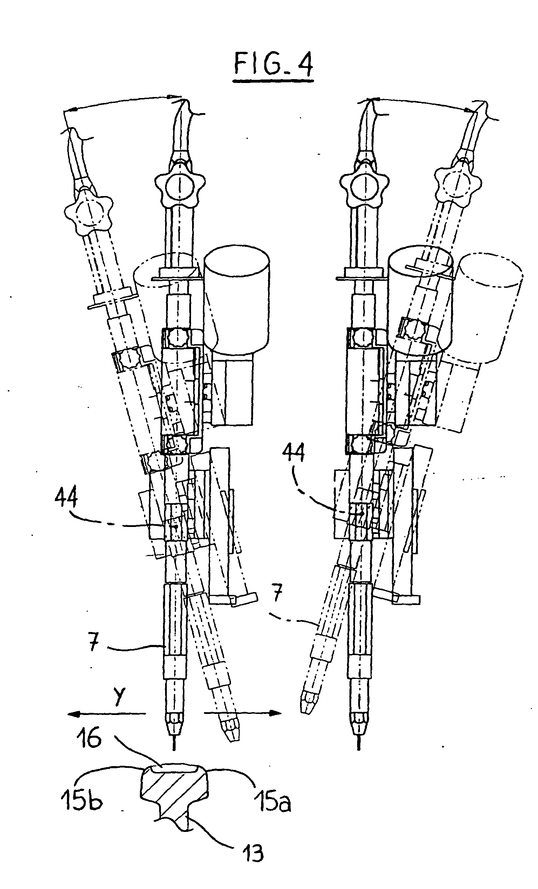

En alternative ou en complément, la torche 7 peut être mobile en rotation autour d'un axe 44 (voir figure 4) parallèle à l'axe 45 passant par les deux crocs 11a, 11b d'ancrage du bâti (c'est-à-dire donc également par l'axe du rail 13, lorsque le bâti est posé sur lui).

Comme le montre la figure 4, une rotation de la torche α par exemple jusqu'à 30° de part et d'autre de la verticale peut être autorisée, permettant ainsi en particulier d'accéder, dans une meilleure position, à un éventuel soudage près des bords latéraux 15a ou 15b du rail (creux latéral à combler).

Sur la figure 4, on aura noté que les deux positions représentées (inclinée vers la gauche puis inclinée vers la droite) de la torche combinent à cette rotation un déplacement en hauteur.

La molette de serrage 47 permet de fixer la position, une fois l'angle atteint.

Pour assurer le soudage de la zone de rail 16 endommagée (voir figure 3), le plateau 37 est mobile, parallèlement à l'axe 45, dans la fente horizontale 39 vis-à-vis de laquelle il peut également entrer ou sortir, suivant la direction 51 qui est en l'espèce perpendiculaire à l'axe 45 et horizontale.

Ces deux directions, repérées respectivement X et Y, ont été figurées avec ce même repère, respectivement sur les figures 3 et 4.

Le déplacement suivant ces directions X et/ou Y de la torche, à la vitesse qui convient et en relation avec l'opération de soudage, s'effectue au moyen d'au moins un moteur (moteur électrique en particulier) tel que 52 associé à une crémaillère.

Eventuellement, ce moteur (ou un moteur annexe) aurait pu commander également le déplacement vertical de la torche dont on a déjà parlée et/ou son positionnement angulaire (angle α).

Si, comme cela a été indiqué, la torche est montée amovible vis-à-vis du plateau 37, la gaine 28 et le dévidoir 29 le seront avantageusement aussi.

Le dévidoir 29 peut se présenter comme un boîtier avec une porte frontale d'accès permettant de charger le fil fourré qui peut être en particulier disposé à la manière d'une bobine.

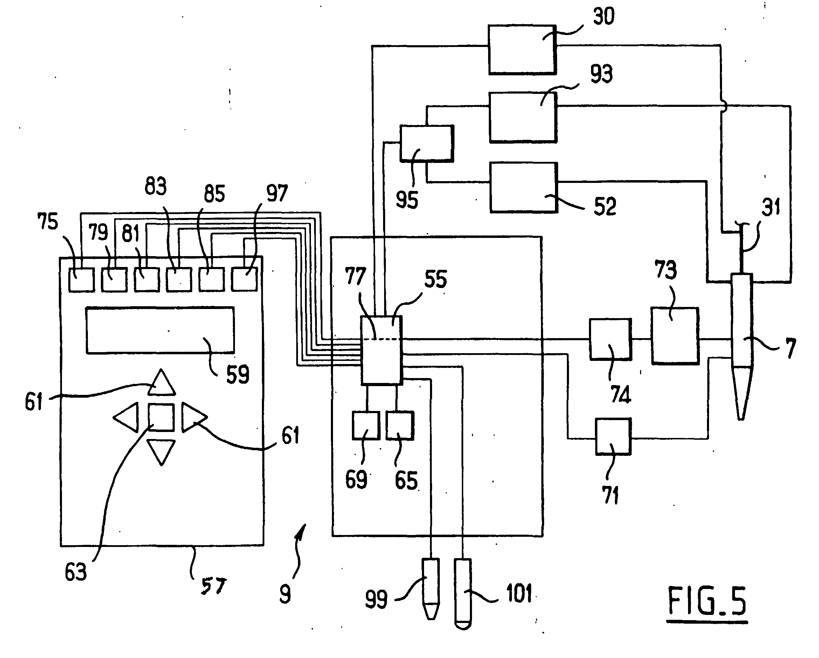

La mise en oeuvre du soudage est contrôlée et commandée par l'unité de commande et de contrôle 9 (voir en particulier figure 5).

Le boîtier 9 comprend en particulier une unité centrale à microprocesseur 55 à laquelle est connecté un clavier de façade 57 comportant des boutons de commandes directionnelles 61 et d'autres boutons de commande ou de validation, tels que 63 (il peut s'agir d'un clavier 6 touches, sous "LEXAN"), et un écran d'affichage 59.

Les commandes transmises par l'intermédiaire du boîtier 57 génèrent des instructions et activent en particulier un "programme de soudage" schématisé en 65.

Bien entendu, le déroulement des instructions de ce programme s'opère au travers de l'unité centrale 55 et d'une unité mémoire associée 69.

Pour le déroulement du soudage, il est montré figure 5 que le moteur 52 est également connecté au boîtier 9, et en particulier à l'unité centrale 55.

Par ailleurs, cette unité centrale communique avec un capteur de position 71 (également appelé "moyen d'acquisition d'emplacements géométriques").

Le capteur de position 71 est ici relié à la torche 7, ainsi qu'à l'unité mémoire 69, de manière à capter et à mémoriser certains emplacements géométriques à relever sur le rail, dans une phase "préparatoire", préalable au soudage effectif.

L'unité centrale 55 est également reliée au moteur 30 d'alimentation en fil fourré de la torche, laquelle est elle-même connectée à un générateur électrique 73 adapté pour générer, pendant le temps qui convient, une énergie électrique (tension, courant,...) appropriée à l'obtention des conditions de soudage recherchées.

Le générateur électrique 73 et l'horloge 74 associée sont placés sous la commande de l'unité centrale 55. Partant du générateur 73, un fil 72 alimente électriquement la torche (borne (+) 76), figure 4).

Avec un boîtier 9 ainsi globalement constitué, une opération de soudage peut typiquement s'opérer de la manière suivante :

Tout d'abord, on positionne l'automate 1 sur le rail 13, en crochetant le rail par l'intermédiaire des moyens d'appui 11a, 11b déjà décrits (voir figure 2).

L'automate est ainsi "auto-aligné", la torche 7 étant supposée montée sur son support 37 et donc alignée suivant l'axe 45 sensiblement commun du rail et des deux moyens d'appui 11a, 11b.

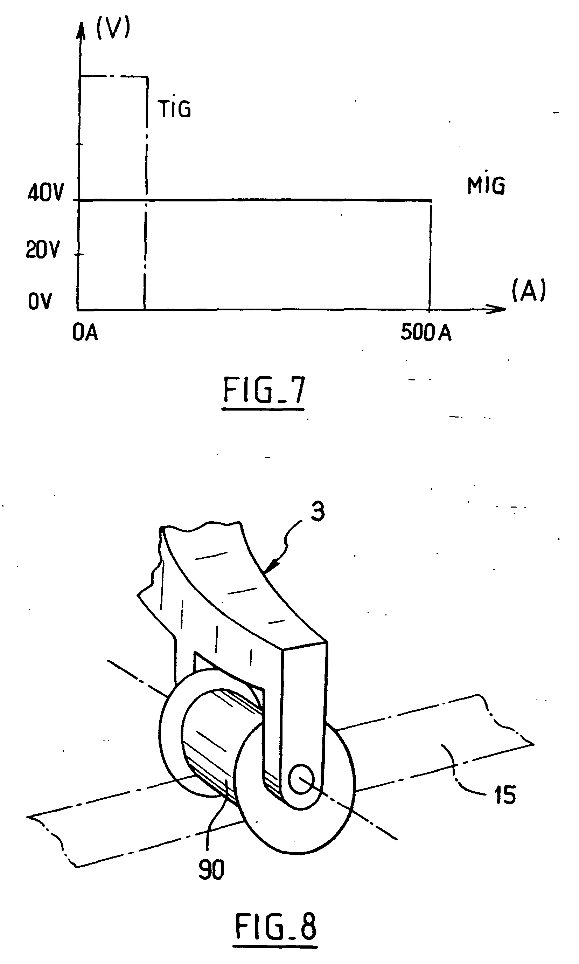

Dans une étape préparatoire au soudage, l'opérateur agit alors sur l'interface 57 et, à l'aide d'un bouton de commande approprié tel que le bouton 63, déclenche la "phase préparatoire" du programme de soudage 65, initiant ainsi le relèvement de données géométriques liées à l'emplacement 16 à souder (voir figure 6).

Plus précisément, le menu du programme 65 amène l'opérateur à rendre opératoire un premier moyen (interface) de commande schématisé en 75 qui va lui permettre de commander lui-même, par les boutons directionnels 61, le déplacement de la torche 7 (via le moteur 52, en l'espèce).

Sur la figure 5, les pointillés 77 marquent la commande "manuelle" autorisée.

Initialement, la torche 7 est dans une position d'origine dite "position de référence" A0 que l'opérateur peut ajuster, de telle manière qu'elle se situe en un emplacement caractéristique de la zone 16, par exemple dans un coin, comme sur la figure 6.

Cette position A0 va être enregistrée en mémoire 69, par l'intermédiaire du capteur de position 71, en réponse à une demande formulée par le programme 65 sur l'écran 59.

Un repérage suivant les axes X (45) et Y (51) est conseillé et a priori prévu.

Partant de cette position de référence (A0), l'opérateur va commander un déplacement de cette torche face sensiblement à la périphérie de la zone 16.

Ainsi, trois points A0, B0, C0 peuvent être relevés, comme montré sur la figure 6, suite par exemple à un déplacement suivant l'axe X puis l'axe Y.

En particulier, trois des quatre angles d'un parallélogramme peuvent être ainsi relevés et mis en mémoire de l'automate.

A partir de ces trois points, l'unité centrale peut calculer la surface de la zone 16 à souder, en référence à une forme prédéfinie (parallélogramme rectangle, triangle,...).

En fin de cette étape "préparatoire au soudage", les relevés d'emplacement géométriques effectués par l'intermédiaire du capteur 71 sont donc stockés en mémoire 69.

L'opérateur peut alors déclencher l'étape suivante du programme 65.

En réponse à une demande d'instructions apparaissant sur l'afficheur 59, il peut en particulier initier la phase de "soudage effectif".

Préalablement, il peut toutefois avoir été utile d'effectuer une adaptation en hauteur et/ou angulaire de la torche 7, comme déjà expliqué.

Une fois la position correcte atteinte, le programme 65 déclenche l'opération de soudage automatique, ceci par activation des seconds moyens de commande schématisés en 79, consécutivement à une validation par l'opérateur d'une étape du programme 65 qui s'est affichée en 59.

L'unité centrale 55, en liaison avec la mémoire 69, va alors, au fur et à mesure des étapes du programme, tout d'abord placer la torche 7 dans sa position A0 de référence, puis commander son déplacement suivant les axes X et/ou Y, à la vitesse requise par le type de soudage qui convient, la torche étant alimentée par le générateur d'énergie 73, son approvisionnement en fil fourré étant assuré par le moteur 30.

En fonction des données programmées, le déplacement de la torche sur la surface de la zone 16 peut s'effectuer de différentes manières, telles par exemple que suivant le trajet indiqué en traits mixtes sur la figure 6 (On remarquera que la torche se déplace alors dans les limites du parallèllogramme dont trois des quatre sommets correspondent aux points relevés et mémorisés : A0, B0, C0).

Différents types de soudage existants (par exemple soudages dénommés "TIG" : soudage à courant constant et "MIG" : à potentiel constant), un type de soudage prédéfini a été choisi, comme par exemple le soudage "MIG" dont une courbe type : tension d'arc (V)/intensité d'arc (A) est représentée sur la figure 7, en trait plein.

Une fois la surface de soudage 16 balayée par la torche, son déplacement s'interrompt (on peut par exemple avoir prévu que le déplacement parte du point A0 et se termine en C0).

Plusieurs passes peuvent être nécessaires, telles qu'en particulier deux passes avec, entre elles, nettoyage de la zone soudée et abrasion des boursouflures, permettant ainsi d'obtenir, en fin de la deuxième passe, le remplissage complet du creux 16 qui, après nouvelle abrasion, redonnera au rail une surface sensiblement lisse et continue, sans creux et donc entièrement de niveau.

Pour protéger l'opérateur, un capot de protection amovible (non représenté) pourra recouvrir la torche et la zone de rail à souder.

A noter également que pour un contrôle de l'arc électrique créé, on prévoiera de préférence, en plus d'un câble d'alimentation pour la tension de soudage, un câble de mesure de cette tension et un câble de mesure du courant effectivement reçus par la torche (câbles non représentés).

Bien que le fonctionnement d'une telle torche soit connu, on rappellera brièvement son principe :

Par le fil (+) 72, la torche est alimentée électriquement Plus précisément, un patin de frottement 78 électriquement conducteur et relié au fil 72 électrifie le fil métallique 31 dont la pointe sort en 31a, au-delà de l'extrémité libre 7a de la torche. La masse est constituée par le rail 13. La distance e entre 31a et le rail est alors ajustée pour qu'un arc électrique 80 se crée, assurant le dépôt du métal d'apport du fil dans le creux 16.

On a indiqué ci-avant que les caractéristiques de soudage (MIG en l'espèce) ont été entrées dans le programme de soudage, en mémoire.

On peut à cet égard prévoir plusieurs types de soudage, l'opérateur faisant le choix de tel ou tel type, par l'intermédiaire du clavier à un moment donné du déroulement du programme.

Ainsi, un fonctionnement en mode "TIG" peut être envisagé, avec alors une évolution V/A qui peut être celle indiquée en traits mixtes sur la figure 7.

Sur la figure 5, un "troisième moyen de commande" 81 associé au clavier 57 et relié à l'unité centrale 55, schématise le circuit d'interface permettant un tel choix entre les types de soudage.

On peut également prévoir d'offrir à l'opérateur un choix quant au fil fourré devant alimenter la torche.

Sur la figure 5, le repère 83 schématise le quatrième moyen de commande qui va permettre à l'opérateur de faire connaître à l'automate le type de fil effectivement en place dans le dévidoir.

Un tel choix peut être en particulier utile pour une intervention sur un appareil de voie où les rails sont typiquement dans un acier différent de celui des "rails courants", ceci nécessitant des conditions de soudage, et donc un métal d'apport via le fil fourré, différents.

En relation avec ce qui précède, une sélection du type de rail concerné peut également être prévue.

Tel est l'objet du "cinquième moyen de commande" 85 qui schématise les composants électroniques permettant à l'opérateur d'indiquer à l'automate de sélectionner, parmi plusieurs sous-programmes, celui pré-adapté au type de rail en cause.

Il est à noter qu'en particulier des choix différents dans le fil fourré, le type de soudage (TIG, MIG,...), le type de rail (rail courant dans un certain acier, appareil de voie dans un autre acier,...) peuvent induire des modifications dans le mode opératoire du moteur d'alimentation 30 et/ou du moteur 52, ainsi que dans les données de commande et de contrôle transmises par l'intermédiaire de l'unité centrale 55. Mais ceci peut tout à fait être pris en compte, dans le programme de soudage 65.

Il est malgré tout encore à noter qu'en particulier pour une bonne adaptation de l'automate au soudage d'un tronçon de rail d'appareil de voie, il pourra s'avérer utile de motoriser le bâti 3 en lui-même, et de monter ce bâti "sur roulettes" en remplaçant en particulier les crochets d'appui 11a, 11b par des roulettes, telles que celle schématisée en 90 sur la figure 8, pour permettre au bâti de rouler le long des rails.

En pratique, au moins trois roulettes seront nécessaires, deux roulettes pour remplacer les moyens 11a, 11b (ces deux roulettes et la torche 7 étant alors sensiblement alignées suivant le même axe 45), et une troisième roulette déportée au bout d'un bras (non représenté), du côté arrière du bâti, pour reposer sur l'autre rail parallèle de la voie, tel que le rail 91 de la figure 1, ceci pour l'équilibre de l'automate.

En particulier, pour la réparation d'un rail d'appareil de voie, il est conseillé de ne pas utiliser le moteur 52 de la torche pour le déplacement longitudinal selon l'axe des X (axe 45) en lui substituant, pour ce mouvement, un moteur 93 entraînant les roulettes 90.

Pour commander le moteur 93, on a schématisé sur la figure 5 la présence d'un commutateur de motorisation 95 (relais) interposé entre l'unité centrale 55 et le moteur 52 de la torche, ce commutateur étant en liaison opératoire avec un sixième moyen de commande 97 que l'opérateur déclenche, via le clavier 57, en réponse aux instructions du programme 65 qui défilent devant lui sur l'unité d'affichage 59.

Ainsi, si l'ordre est donné par l'opérateur, l'interface de commande 97 va initier, pour le soudage de la zone de rail prévue, un déplacement de la torche et du bâti suivant l'axe longitudinal 45 (axe X), le moteur 52 prenant ponctuellement le relais, pour le déplacement de la torche seule suivant l'axe 51 (axe Y), ceci tant pendant la phase préparatoire de relevé de contour de la zone à souder, que pendant la phase de soudage en elle-même.

Bien entendu, tout ou partie des "moyens de commande" 75, 79, 81, 83,..., 97 peut être combiné, pour affiner les conditions de soudage (vitesse de déplacement de la torche, tension ou courant délivré, durée du soudage, vitesse d'alimentation en fil, en particulier).

A cet égard, il pourra s'avérer également utile de relever la température ambiante au moment du soudage.

C'est pour cela que l'adjonction d'une sonde de température ambiante 99 a été prévue sur la figure 5, de manière à entrer en mémoire 69 cette information, le programme de soudage pouvant alors tenir compte de cette information de température pour adapter l'énergie électrique délivrée par le générateur 73, en fonction des conditions climatiques extérieures (adaptation de l'énergie électrique délivrée à la torche, de la durée d'alimentation de la torche avec cette énergie, voire de la vitesse de déplacement de cette torche).

Il pourrait aussi être prévu d'adjoindre à l'automate un lecteur électronique de données 101 adapté pour lire par exemple un code à barres inscrit sur un support porté par, ou se rapportant au rail à réparer (par exemple une plaque).

Pour toute information concernant un tel lecteur de données 101 (crayon optique par exemple) ou le capteur de température 99, y compris leurs conditions opératoires, on pourra se reporter à la description qui est faite de ce type de moyens dans FR-A-2 572 326 (page 4 ligne 24 - page 5 ligne 28).

Il doit être clair que l'application de l'automate de l'invention peut s'effectuer sur les rails de chemins de fer, de tramways, métros,..., y compris pour des rails de formes différentes de celle illustrée.

On notera également que les relevés préparatoires au soudage (zone 16) pourraient être effectués par un moyen de relevé spécifique mobile, en remplacement de la torche et du capteur 71. Cette solution n'est toutefois pas conseillée.

Par ailleurs, pour le remplissage de la zone 16 (appelé rechargement), différentes techniques peuvent être employées : "longitudinale" ou "transversale", en particulier.

## Revendications

1. Automate de soudage à l'arc électrique, pour la maintenance ou la réparation de rails et appareils de voie, l'automate comprenant un bâti (3), un appareillage de soudage incluant une torche (7) pour souder une zone de rail, le bâti étant pourvu d'au moins deux moyens d'appui (11a, 11b ; 90) sur un rail, ces deux moyens d'appui et la torche étant sensiblement alignés le long dudit rail (13) à souder, **caractérisé en ce qu'**il comprend en outre :
- des moyens (52, 93) de déplacement de la torche, pour assurer la mobilité de celle-ci suivant deux axes transversaux (X, Y), et
- des moyens de commande (55, 61, 63, 65, 75, 79) reliés auxdits moyens de déplacement de la torche pour commander le déplacement de cette torche.

2. Automate selon la revendication 1, **caractérisé en ce que** : les moyens de commande (55, 61, 63, 65, 75, 79) reliés auxdits moyens de déplacement de la torche commandent le déplacement de cette torche en direction suivant axes et en vitesse, ces moyens de commande comprenant :
- des premiers moyens de commande (75) pour commander un premier déplacement de la torche face sensiblement à la périphérie de la zone (16) à souder, pour y effectuer un relevé d'emplacements géométriques (A0, B0, C0), par l'intermédiaire de moyens d'acquisition (71) réliés à une unité mémoire (69), afin de mémoriser les emplacements géométriques relevés sur le rail,
- et des seconds moyens de commande (79), pour commander automatiquement un second déplacement de la torche face à la zone à souder, dans les limites du relevé effectué et en fonction des emplacements géométriques mémorisés.

3. Automate selon la revendication 1, **caractérisé en ce que** :
- la torche (7) est liée, à l'extérieur du bâti (3), à un support (25) pourvu de moyens de réglage (43, 47) en hauteur et/ou angulaire de la torche par rapport à ce support,
- et le support est relié, à intérieur du bâti, à des moyens (52, 93) de déplacement de la torche, pour déplacer celle-ci le long d'un axe longitudinal (45 ; X) reliant lesdits deux moyens d'appui et transversalement à cet axe (51 ; Y), tel en particulier que dans un plan horizontal.

4. Automate selon l'une quelconque des revendications 1 à 3, **caractérisé en ce que**:
- la torche est reliée à une gaine (27), elle-même reliée à un dévidoir (29), dans lesquels respectivement passe et se dévide une bobine de fil fourré (31), et
- entre la torche et la gaine est interposé un redresse-fil (33a, 33b), pour supprimer une courbure du fil fourré provoquée par son passage dans la gaine.

5. Procédé de soudage d'une zone localisée d'un rail, pour la maintenance ou la réparation de rails ou appareils de voie, le procédé comprenant les étapes suivantes:
a) on positionne, le long d'au moins un rail (13, 97), un automate (1) de soudage à l'arc électrique utitisant des fils fourrés (31), pour la maintenance ou la réparation de rails et appareils de voie, l'automate comprenant un bâti (3), un appareillage de soudage incluant une torche (7) pour souder une zone de rail, l'automate étant aligné suivant sensiblement l'axe longitudinal du rail (45 ; X),
b) on place la torche dans une position de référence (A0) par rapport à la zone (16) à souder,
c) on relève des caractéristiques géométriques (A0, B0, C0) de la zone à souder, pour obtenir des données de repérage,
d) on fournit ces données de repérage à une unité mémoire (69) de l'unité de commande (55), et
e) on déclenche un programme (65) de soudage qui tient compte desdites données de repérage fournies et qui induit un déplacement de la torche (7) sur la zone à souder, un approvisionnement de la torche en fit fourré et une alimentation électrique déterminée (73, 74) de ladite torche, pour le soudage, cet approvisionnement et cette alimentation dépendant d'un type de soudage prélablement déterminé, en fonction de la typologie du rail.

6. Procédé selon la revendication 5, **caractérisé en ce que**, préalablement à l'étape e), on sélectionne par l'intermédiaire de l'unité de commande (9, 83) et parmi plusieurs choix, le type de fil fourré (31) correspondant à celui réellement utilisé pour le soudage, et l'automate en déduit:
- les conditions d'approvisionnement de la torche (7) en fil, telles que la vitesse d'approvisionnement,
- les conditions d'alimentation électrique (73, 74) de cette torche, et
- !a vitesse de déplacement de ladite torche, au moins lors de l'étape e).

7. Procédé selon la revendication 5 ou la revendication 6, **caractérisé en ce que**, préalablement à l'étape e), on sélectionne par l'intermédiaire de l'unité de commande (9, 85), et parmi plusieurs choix, le type de rail à souder, et l'automate en déduit, en fonction de la typologie du rail :
- les conditions d'approvisionnement de la torche (7) en fil, telles que la vitesse d'apprdvisionnement,
- les conditions d'alimentation électrique (73, 74) de cette torche, et
- la vitesse de déplacement de ladite torche, au moins lors de l'étape

8. Procédé selon l'une des revendications 5 à 7, **caractérisé en ce que** :
- lors de l'étape b), on positionne en hauteur et/ou angulairement la torche (7) par rapport à la zone (16) de rail à souder, dans sa position de référence (A0),
- lors de l'étape c), on fait se déplacer la torche le long du contour de la zone à souder, pour relever lesdites caractéristiques géométriques,
- puis, lors de l'étape e), après un repositionnement de la torche dans sa position de référence (A0), on fait se déplacer cette torche face à la zone à souder, selon le programme de soudage.

## Claims

1. Automatic electric-arc welding device for the maintenance or repair of rails and track apparatus, the automatic device comprising a frame (3), a welding apparatus including a torch (7) for welding an area of rail, the frame being provided with at least two means of support (11a, 11b; 90) on a rail, the two means of support and the torch being substantially aligned along said rail (13) to be welded, **characterised in that** the automatic device further comprises:
- means (52, 93) for displacement of the torch in order to ensure that the torch is movable in accordance with two transverse axes (X, Y), and
- control means (55, 61, 63, 65, 75, 79) which are connected to said means for displacement of the torch in order to control the displacement of the torch.

2. Automatic device according to claim 1, **characterised in that**:
- the control means (55, 61, 63, 65, 75, 79) connected to said means for displacement of the torch control the displacement of the torch in terms of direction in accordance with said axes and in terms of speed, the control means comprising:
- first control means (75) for controlling a first displacement of the torch substantially facing the periphery of the area (16) to be welded, in order to determine **in that** area geometrical locations (A0, B0, C0) by way of acquisition means (71) connected to a memory unit (69), in order to store the geometrical locations determined on the rail,
- and second control means (79) for automatically controlling a second displacement of the torch facing the area to be welded, within the limits of the determination carried out and as a function of the stored geometrical locations.

3. Automatic device according to claim 1, **characterised in that**:
- the torch (7) is connected, outside the frame (3), to a support (25) provided with means (43, 47) for adjusting the height and/or angle of the torch relative to the support,
- and the support is connected, inside the frame, to means (52, 93) for displacement of the torch in order to displace the torch along a longitudinal axis (45; X) connecting said two support means and transversely to the axis (51; Y), such as in particular in a horizontal plane.

4. Automatic device according to any one of claims 1 to 3, **characterised in that**:
- the torch is connected to a casing (27) which is itself connected to an uncoiling device (29), in which a coil of core wire (31) passes and is uncoiled, respectively, and
- between the torch and the casing there is interposed a wire straightener (33a, 33b) for preventing the core wire from bending as a result of its passing into the casing.

5. Method for welding a localised area of a rail, for the maintainance or repair of rails or track apparatus, the method comprising the following steps:
a) there is positioned along at least one rail (13, 91) an automatic electric-arc welding device (1) which uses core wires (31) for the maintenance or repair of rails and track apparatus, the automatic device comprising a frame (3), a welding apparatus including a torch (7) for welding an area of rail, the automatic device being aligned substantially in accordance with the longitudinal axis of the rail (45; X),
b) the torch is placed in a reference position (A0) with respect to the area (16) to be welded,
c) the geometrical characteristics (A0, B0, C0) of the area to be welded are determined, in order to obtain reference data,
d) the reference data are supplied to a memory unit (69) of the control unit (55), and
e) a welding programme (65) is started, which programme takes into account said supplied reference data and induces displacement of the torch (7) over the area to be welded, a delivery of core wire to the torch and a given supply of power (73, 74) to said torch, for welding, the delivery and the supply being dependent on a previously determined type of welding, as a function of the type of rail.

6. Method according to claim 5, **characterised in that**, prior to step e), the type of core wire (31) corresponding to that actually used for the welding is selected from a plurality of choices by way of the control unit (9, 83), and the automatic device deduces therefrom:
- the conditions for the delivery of wire to the torch (7), such as the delivery speed,
- the conditions for the supply of power (73, 74) to the torch, and
- the displacement speed of said torch, at least during step e).

7. Method according to claim 5 or claim 6, **characterised in that**, prior to step e), the type of rail to be welded is selected from a plurality of choices by way of the control unit (9, 85), and the automatic device deduces therefrom, as a function of the type of rail:
- the conditions for the delivery of wire to the torch (7), such as the speed of provision,
- the conditions for the supply of power (73, 74) to the torch, and
- the displacement speed of said torch, at least during step e).

8. Method according to any one of claims 5 to 7, **characterised in that**:
- during step b), the torch (7) is positioned in terms of height and/or in terms of angle relative to the area (16) of rail to be welded, in its reference position (A0),
- during step c), the torch is displaced along the contour of the area to be welded in order to determine said geometrical characteristics,
- then, during step e), after the torch has been repositioned in its reference position (A0), the torch is displaced facing the area to be welded, in accordance with the welding programme.

## Patentansprüche

1. Automat zum Lichtbogenschweißen für die Instandhaltung oder die Reparatur von Schienen und Weichen, wobei der Automat ein Gehäuse (3) und eine Schweißapparatur mit einem Brenner (7) zum Schweißen eines Schienenbereichs umfasst, wobei das Gehäuse mit mindestens zwei Mitteln zum Abstützen (11a, 11b; 90) auf einer Schiene ausgestattet ist, wobei diese zwei Stützmittel und der Brenner in etwa längs der Schiene (13), die zu schweißen ist, ausgerichtet sind, **dadurch gekennzeichnet, dass** er darüber hinaus umfasst:
- Mittel (52, 93) zum Verschieben des Brenners, um dessen Beweglichkeit längs zweier Querachsen (X, Y) sicherzustellen, und
- Steuermittel (55, 61, 63, 65, 75, 79), die mit den Mitteln zum Verschieben des Brenners verbunden sind, um das Verschieben des Brenners zu steuern.

2. Automat nach Anspruch 1, **dadurch gekennzeichnet, dass**:
- die Steuermittel (55, 61, 63, 65, 75, 79), die mit den Mitteln zum Verschieben des Brenners verbunden sind, die Verschieberichtung des Brenners längs den Achsen und die Verschiebegeschwindigkeit steuern, wobei diese Steuermittel umfassen:
- erste Steuermittel (75) zum Steuern eines ersten Verschiebens des Brenners bis etwa zum Außenrand des Bereichs (16), der zu schweißen ist, um dort eine Messung geometrischer Punkte (A0, B0, C0) vorzunehmen, mit Erfassungsmitteln (71), die verbunden sind mit einer Speichereinheit (69), um die geometrischen Punkte zu speichern, die auf der Schiene gemessen wurden,
- und zweite Steuermittel (79) zum automatischen Steuern eines zweiten Verschiebens des Brenners zu dem Bereich hin, der zu schweißen ist, innerhalb der Grenzen der durchgeführten Messung und in Abhängigkeit von den gespeicherten geometrischen Punkten.

3. Automat nach Anspruch 1, **dadurch gekennzeichnet, dass**:
- der Brenner (7) auf der Außenseite des Gehäuses (3) mit einem Halter (25) verbunden ist, der mit Mitteln (43, 47) zum Einstellen der Höhe und / oder des Winkels des Brenners im Verhältnis zu diesem Halter ausgestattet ist,
- und der Halter im Inneren des Gehäuses mit Mitteln (52, 93) zum Verschieben des Brenners verbunden ist, um ihn längs einer Längsachse (45; X), die die beiden Stützmittel verbindet, und quer zu dieser Achse (51; Y) zu verschieben, ebenso wie insbesondere in horizontaler Ebene.

4. Automat nach einem der Ansprüche 1 bis 3, **dadurch gekennzeichnet, dass**:
- der Brenner mit einer Umhüllung (27) verbunden ist, die ihrerseits mit einem Drahtvorschubgerät (29) verbunden ist, durch die eine Fülldrahtspule (31) verläuft und abgerollt wird; und
- sich zwischen dem Brenner und der Umhüllung ein Drahtrichter (33a, 33b) befindet, um ein Verbiegen des Fülldrahts beim Durchlaufen der Hülle zu vermeiden.

5. Verfahren zum Schweißen eines begrenzten Bereichs einer Schiene, für die Instandhaltung oder die Reparatur von Schienen oder Weichen, wobei das Verfahren die folgenden Schritte umfasst:
a) ein Automat (1) zum Lichtbogenschweißen mit Fülldraht (31) für die Instandhaltung oder die Reparatur von Schienen und Weichen wird längs mindestens einer Schiene (13, 91) positioniert, wobei der Automat ein Gehäuse (3) und eine Schweißapparatur mit Brenner (7) zum Schweißen eines Schienenbereichs umfasst, wobei der Automat in etwa an der Längsachse der Schiene (45; X) ausgerichtet wird,
b) der Brenner wird in eine Bezugsposition (A0) im Verhältnis zu dem Bereich (16) gesetzt, der zu schweißen ist,
c) es werden geometrische Eigenschaften (A0, B0, C0) des Bereichs, der zu schweißen ist, erfasst, um Bezugsdaten zu erhalten,
d) die Bezugsdaten werden an eine Speichereinheit (69) der Steuereinheit (55) bereitgestellt, und
e) es wird ein Schweißprogramm (65) gestartet, das die bereitgestellten Bezugsdaten berücksichtigt und das ein Verschieben des Brenners (7) in den Bereich, der zu schweißen ist, und die Versorgung des Brenners mit Fülldraht sowie eine festgelegte Stromversorgung (73, 74) des Brenners zum Schweißen einleitet, wobei die Versorgung und die Stromversorgung von der Art des Schweißverfahrens abhängen, das zuvor in Abhängigkeit vom Schienentyp festgelegt worden ist.

6. Verfahren nach Anspruch 5, **dadurch gekennzeichnet, dass** vor dem Schritt e) über die Steuereinheit (9, 83) und unter mehreren Wahlmöglichkeiten die Art von Fülldraht (31) ausgewählt wird, der dem tatsächlich zum Schweißen verwendeten Fülldraht entspricht, woraus der Automat ableitet:
- die Bedingungen der Versorgung des Brenners (7) mit Draht, wie zum Beispiel die Vorschubgeschwindigkeit,
- die Bedingungen der Stromversorgung (73, 74) des Brenners, und
- die Verschiebegeschwindigkeit des Brenners, zumindest bei Schritt e).

7. Verfahren nach Anspruch 5 oder 6, **dadurch gekennzeichnet, dass** vor dem Schritt e) über die Steuereinheit (9, 85) und unter mehreren Wahlmöglichkeiten der Schienentyp ausgewählt wird, der zu schweißen ist, und der Automat daraus, in Abhängigkeit vom Schienentyp, ableitet:
- die Bedingungen der Versorgung des Brenners (7) mit Draht, wie zum Beispiel die Vorschubgeschwindigkeit,
- die Bedingungen der Stromversorgung (73, 74) des Brenners, und
- die Verschiebegeschwindigkeit des Brenners, zumindest bei Schritt e).

8. Verfahren nach einem der vorhergehenden Ansprüche 5 bis 7, **dadurch gekennzeichnet, dass**:
- bei Schritt b) der Brenner (7) in seiner Bezugsposition (A0) im Verhältnis zu dem Schienenbereich (16), der zu schweißen ist, in der Höhe und/oder im Winkel eingestellt wird,
- bei Schritt c) der Brenner längs der Außenlinie des Bereichs, der zu schweißen ist, verschoben wird, um die geometrischen Eigenschaften zu erfassen,
- dann bei Schritt e) der Brenner, nachdem er wieder in seine Bezugsposition (A0) gesetzt wurde, gemäß dem Schweißprogramm zu dem Bereich hin geschoben wird, der zu schweißen ist.
